# FASCICULE DE BREVET EUROPEEN

(11) **EP 0 712 274 B1**
(45) Date de publication et mention de la délivrance du brevet: **12.05.1999**
(21) Numéro de dépôt: 94924339.8
(22) Date de dépôt: 05.08.1994
(51) Int. Cl.: A01K 1/01

(54) **BAC A LITIERE AUTO-NETTOYANT POUR ANIMAUX**
SELBST-REINIGENDE TIERTOILETTE
SELF-CLEANING LITTER BOX FOR ANIMALS

(30) Priorité: 06.08.1993 FR 9309707
(43) Date de publication de la demande: 22.05.1996
(73) Titulaire: Barbot, Gérard, 75011 Paris (FR); Rameau, Cyril, 78580 Maule (FR); Sanchez, Patrick Franck, 93330 Neuilly S/Marne (FR)
(72) Inventeur: Barbot, Gérard, 75011 Paris (FR); Rameau, Cyril, 78580 Maule (FR); Sanchez, Patrick Franck, 93330 Neuilly S/Marne (FR)
(74) Mandataire: Leboyer, Jean-Jacques
(86) Numéro de dépôt international: FR9400988
(87) Numéro de publication internationale: WO9504454

(56) Documents cités:
- FR-A- 2 648 313
- US-A- 4 465 018

## Description

La présente invention concerne un bac à litière pour animaux. Elle concerne plus particulièrement un bac à litière auto-nettoyant pour animaux domestiques.

Actuellement, le triage de la litière souillée est rarement effectué par la personne ayant la charge de l'animal domestique responsable de ces souillures. La litière une fois souillée est le plus souvent encore rejetée dans sa quasi-totalité; ou alors le triage entre litière souillée et litière encore utilisable est fait manuellement par cette personne à l'aide d'une pelle plus ou moins adaptée. Le nettoyage du bac à litière et le renouvellement de celle-ci sont également des opérations manuelles trop fréquentes et perçues comme des corvées.

Des moyens de substitution ont été proposés dans le commerce et dans des publications, notamment des publications de demandes de brevets. Selon certaines de celles-ci, les moyens proposés visent à supprimer la litière, mais ne respectent pas l'instinct naturel du chat; ils consistent alors en un tapis absorbant jetable (voir document FR-A-2602643). D'autres publications décrivent des tentatives pour supprimer le nettoyage du bac grâce à des bacs ou des fonds de bacs jetables (voir document FR-A-2618050). Mais ces tentatives ne permettent aucune économie de litière ou de consommables et n'apportent aucune solution au souci d'autonomie du bac. D'autres publications proposent des moyens pour automatiser l'évacuation et le remplacement de toute la litière utilisée par de la litière propre (voir document FR-A-2648313), mais ces moyens antérieurs n'offrent aucune économie de litière et obligent à l'achat de consommables spécifiques. D'autres publications proposent en plus de séparer les déchets solides de la litière utilisée pour utiliser de nouveau, après intervention humaine, la litière humide mélangée à de la litière sèche (voir document US-A-4465018 pui montre les caractéristiques du préambule de la revendication 1). Mais elles ne proposent aucune solution au souci d'hygiène.

Il existait donc un besoin pour rendre le moins contraignant possible l'entretien et le renouvellement de la litière des animaux domestiques et assimilés.

On a maintenant trouvé de manière inattendue que l'on peut atteindre cet objectif, ainsi que d'autres qui apparaîtront à la lumière des explications qui vont suivre, en mettant en oeuvre un dispositif constituant bac à litière, dans lequel le triage et le renouvellement de la litière propre et sèche sont automatiques ou semi-automatiques. On a ainsi notamment mis au point un procédé et un dispositif permettant de remédier à cette surconsommation de litière, ainsi qu'aux défauts d'hygiène et d'autonomie des dispositifs existants.

Le dispositif selon l'invention présente l'avantage supplémentaire d'assurer de façon séquentielle ou simultanée le nettoyage automatique du fond du bac, le tri et l'évacuation de la litière souillée et de celle-ci seulement, ainsi que le recyclage et l'acheminement de la litière propre récupérée vers une réserve rechargeable et destinée à entretenir le maintien à un niveau pratiquement constant de la litière.

La présente invention a pour premier objet un dispositif formant bac à litière pour animaux, comprenant une combinaison de:
- une réserve de litière propre et/ou recyclée, comprenant en option:
   - une double paroi favorisant l'utilisation prioritaire de la litière triée sur la litière neuve, ainsi que sa répartition sur toute la largeur du bac pour un faible volume mort, et/ou
   - un trop-plein évitant un blocage du système de remontée en cas de remplissage excessif de la réserve;
- un tamis flexible, équipé pour pouvoir se déplacer comme un tapis transporteur sur un fond fixe;
- un fond fixe, sur lequel circule le tamis flexible et qui constitue le fond du réceptacle pour l'animal;
- un réceptacle pour déjections et matières souillées, de préférence assurant le maintien d'un sac poubelle et la répartition des déchets dans celui-ci à l'aide d'un poussoir;
- un organe de transport continu, tel qu'une chaîne ou une courroie, mue par exemple par un pignon entraîneur, circulant dans une enceinte tubulaire comprenant successivement:
   - une zone de triage et de récupération de la litière propre triée, avantageusement en forme de gouttière,
   - une zone de remontée de la litière,
   - une zone de distribution de la litière dans la réserve,
   - une zone de retour de la chaîne vers la zone de triage;
   ainsi qu'avantageusement, en option,
- un fond amovible protégeant le réceptacle pour déjections et matières souillées ou le sac poubelle et faisant réceptacle pour les déchets qui seraient tombés hors du sac poubelle;
- des rebords anti-projection fixes ou amovibles autour de la zone utile pour l'animal;
- un clapet anti-odeurs, destiné à éviter la remontée des odeurs éventuelles provenant du dit réceptacle pour déjections et matières souillées;
- un système électrique ou électronique de détection de passage de l'animal et de temporisation;
   et/ou
- un système électrique assurant le fonctionnement et/ou l'autonomie du bac en cas de panne de l'alimentation électrique principale.

Pour plus de commodité, l'invention est décrite ci-après plus en détail en référence aux bacs à litière pour chats, mais elle s'applique tout aussi bien, par équivalence, aux bacs à litière destinés à d'autres animaux, notamment d'autres animaux domestiques, des animaux de ferme ou des animaux sauvages en captivité, pour autant que leur litière soit triable par tamisage. Les dimensions du dispositif peuvent être modulées dans chaque cas d'espèce en fonction de la taille et de la morphologie de l'animal. Plus généralement l'invention décrite ici s'applique également à tout type de triage de matières pouvant être déposées sur un tamis en vue de l'élimination de matières polluées et du recyclage de matières non polluées récupérées au moyen du triage.

L'invention sera mieux comprise, en référence à la description qui suit, aux formes de mise en oeuvre avantageuses décrites également ci-après et aux dessins annexés, dans lesquels:
Fig. 1 représente une vue en coupe schématique partielle selon un plan vertical d'une forme de réalisation du bac à litière selon l'invention;
Fig. 2 représente une vue de dessus d'un tel dispositif formant bac à litière selon l'invention;
Fig. 3 représente une vue de face en coupe schématique partielle d'un tel dispositif formant bac à litière selon l'invention;
Fig. 4 représente en coupe schématique partielle la section d'une forme de réalisation du canal anti-engorgement de remontée;
Fig. 5 représente en perspective cavalière une forme de réalisation du bac à litière selon l'invention.

Le dispositif ainsi décrit selon sa variante préférée comporte pour l'essentiel un tamis flexible à maille calibrée, monté sous forme de bande sans fin (1) et entraîné en rotation par un rouleau moteur (3), avantageusement denté. La partie supérieure du tamis est plaquée sur un fond avantageusement bombé, formant support pour litière (2). En aval dans le sens du déplacement du tamis (1), une zone de triage (4) déborde du dit fond, au-dessus d'une gouttière de récupération de la litière propre (5). La litière souillée, agglomérée par les déjections animales, est séparée de la litière propre et tombe dans l'entrée du réceptacle pour déjections et matières souillées (21).

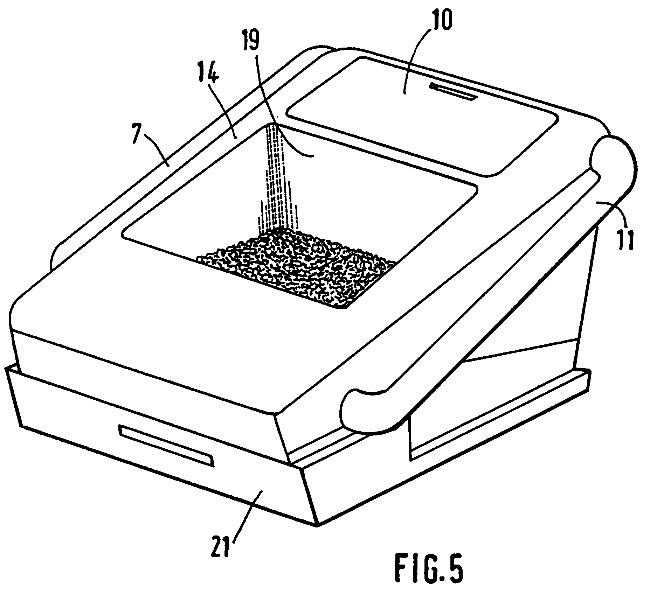

La litière propre une fois dans la gouttière (5) est acheminée vers une réserve (10), via un canal de retour de la litière propre (7). Dans ce canal avantageusement constitué de façon à former un canal à ouverture longitudinale appropriée pour qu'il ait une fonction anti-engorgement (7) (voir Fig. 4), circule de préférence une chaîne ou courroie de transport (8), dont les anneaux, franges ou poils entraînent la litière. La chaîne est mise en rotation avantageusement par une roue ou poulie dentée (12) (voir Fig. 2). La roue dentée (12) est mise en rotation par un moteur ou tout autre organe électrique ou mécanique. La roue dentée (12) agit sur la chaîne (8) circulant dans le dit canal (7,9,11) à travers une lumière ménagée à cette fin dans une partie haute ou basse appropriée, telle que de préférence un coude du canal. Grâce à l'interruption en (9) du dit canal, la litière propre recyclée est alors déversée dans la double paroi de la réserve (20). La double paroi (20) assure, pour un volume mort minimum, la répartition de la litière sur toute la largeur du bac, ainsi que le passage prioritaire de la litière recyclée sur la litière neuve. La chaîne (8) retourne ensuite vers la zone de triage (4) par la partie (11) du canal susdit (voir Fig. 2), qui la ramène en position de passage dans la gouttière de récupération (5) pour un nouvel entraînement de la litière propre à recycler selon le circuit indiqué ci-dessus.

Un clapet anti-odeurs (13) peut être monté en option, en recouvrement au-dessus de l'entrée du compartiment à litière souillée. Celui-ci peut être un simple tiroir amovible (21), qu'il est en outre possible de garnir intérieurement d'un sac poubelle (6). En option également, des rebords (14) fixes ou amovibles peuvent être prévus pour éviter ou limiter les projections de litière par l'animal en dehors de l'enceinte du bac.

La réserve (10) est bien sûr initialement et ensuite périodiquement remplie ou regarnie avec de la litière propre. Cette litière se trouve répartie sur le tamis (1) lorsque celui-ci avance, selon une épaisseur réglable et ajustable à l'aide d'une règle de répartition (19).

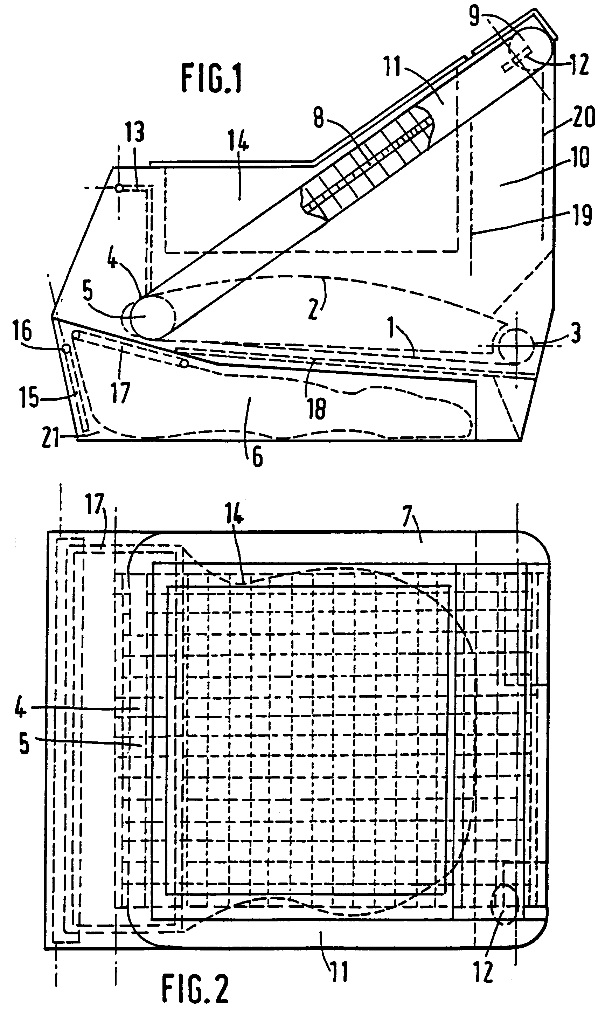

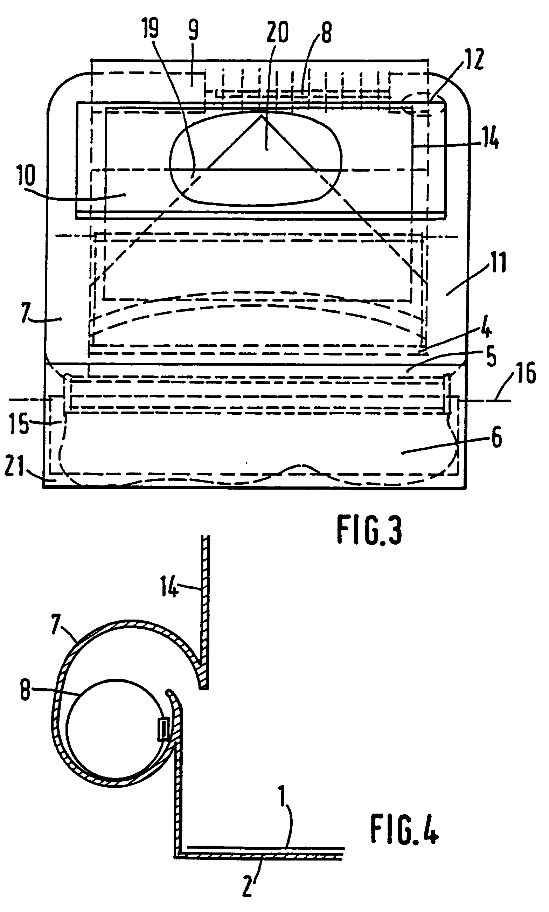

Dans une forme de réalisation compacte préférée, telle que par exemple celle représentée sur la Fig. 1 des dessins annexés, le réceptacle est apte à recevoir un sac poubelle (6) étalé pratiquement horizontalement dans un volume minimum au-dessous de la surface inférieure de la bande sans fin formant tamis (1). La répartition des déchets recueillis dans le sac poubelle (6) du réceptacle (21) est facilitée, si on le souhaite, par l'adjonction d'un poussoir (15) au dispositif selon l'invention. Ce poussoir (15) pivote autour d'un axe (16) et il est, par exemple, agencé pour être animé d'un mouvement pendulaire, dont l'impulsion est transmise au sac poubelle. En option un fond amovible (18), muni d'un petit réceptacle, empêche le sac poubelle (6) de toucher le tamis et permet de recueillir les particules de litière qui ne seraient pas tombées dans le cas poubelle (6). De préférence un arceau (17) maintient la gueule du sac poubelle ouverte dans la position convenable.

Dans une version du dispositif selon l'invention particulièrement appropriée pour un chat et pour les divers types de litières du commerce destinées à cet animal, le bac à litière peut avoir une surface utile d'environ 26 cm de largeur et 34 cm de longueur et le tamis peut avoir une maille carrée d'environ 12 mm.

En ce qui concerne les pièces constitutives principales concourant à l'efficacité du dit dispositif, il convient de noter que:
- le tamis est avantageusement constitué en fils ou câbles d'acier inoxydable sertis ou soudés, ou toute autre matière suffisamment souple et résistante;
- la chaîne de remontée de la litière recyclée est dans la pratique composée d'une chaîne ou courroie mécanique entraînant des spires ou des franges raclant le fond des parties de canal (5,7). Elle peut être constituée de préférence d'une chaîne type "Vaucanson" solidarisée avec un long ressort métallique, par exemple par soudage, collage et/ou encliquetage. Elle peut être également selon une variante avantageuse réalisée d'une seule pièce en matière plastique injectée constituant une courroie dentée munie de spires ou franges de forme adaptée à la section du canal de transport de la litière recyclée (5,7,9,11);
- dans la variante selon laquelle le réceptacle contient un sac poubelle (6), celui-ci peut être maintenu ouvert par un arceau (17) fixé dans une position appropriée du réceptacle coulissant formant tiroir (21), en vue de faciliter sa mise en place et son retrait;
- l'ensemble du dispositif peut être animé manuellement par un dispositif mécanique et/ou électriquement par des organes moteurs et de transmission adaptés (non représentés);
- les autres pièces, notamment celles constituant la coque du dispositif, la gouttière et le canal anti-engorgement, ainsi que le fond et la réserve susmentionnés, peuvent être réalisés en toutes matières, de préférence en matière plastique thermoformée ou en matière plastique injectée.

L'ensemble ou un sous-ensemble approprié des moyens fonctionnels composant le dispositif selon l'invention peut être piloté par un système de détection de passage de l'animal et de temporisation.

Pour un tel bac à litière en fonctionnement automatique, le passage de l'animal sur le bac déclenche un cycle de durée déterminée pour le triage de la litière souillée, pour le renouvellement de la litière consommée et pour la remontée de la litière propre et l'introduction dans le réceptacle des souillures à évacuer.

A titre d'exemples non limitatifs de moyens de mise en fonctionnement de ce dispositif, on peut citer le raccordement au réseau électrique alimentant le mécanisme en courant alternatif, l'alimentation par des piles électriques ou des batteries rechargeables, et l'alimentation par des capteurs solaires disposés et orientés convenablement sur le dit bac à litière ou en liaison fonctionnelle avec celui-ci.

Le(s) moteur(s) peu(ven)t être des moteurs électriques de tout type approprié pour un tel usage.

Le fonctionnement du dispositif selon l'invention peut également être totalement ou partiellement manuel.

La litière peut être de tout type et avoir une granulométrie plus ou moins fine.

La taille des mailles du tamis peut être adpatée par l'homme du métier au type de litière concerné dans chaque cas d'espèce. Cette adaptation se fait sur la base, non seulement de la granulométrie de la litière propre, mais aussi de la granulométrie des agglomérats formés par les souillures avec la litière.

Le dispositif selon la présente invention comporte divers avantages, qui apparaîtront à l'homme du métier à la lecture de la description qui précède. L'essentiel tient à ce que le dispositif se nettoie automatiquement. Le triage permet la séparation de la litière de la matière souillée et l'évacuation uniquement de celle-ci. L'introduction dans un sac poubelle de grande capacité des souillures de plusieurs utilisations successives se fait automatiquement. La litière propre récupérée après triage est recyclée automatiquement dans une réserve. Le prélèvement de litière propre pour le maintien à niveau sensiblement constant de la litière s'opère aussi automatiquement plusieurs fois de suite à partir de la réserve de litière, qu'il suffit alors de réalimenter à des intervalles de temps très espacés.

L'invention a également pour objet un procédé pour le nettoyage et le réapprovisionnement automatiques ou semi-automatiques des litières pour animaux, comprenant l'approvisionnement en litière propre fraîche et/ou recyclée d'un réceptacle formant bac adapté à l'animal, la mise en mouvement de translation de la charge de litière après dépôt des déjections et/ou de l'urine sur celle-ci, le triage des parties de litière souillées, le recueil sélectif dans un réceptacle de la fraction de litière souillée à évacuer, la récupération de la fraction de litière propre issue de ce triage, l'acheminement dans la réserve d'approvisionnement de cette fraction de litière propre récupérée, et le recueil et le stockage en vue de leur évacuation subséquente ou ultérieure comme déchet d'une ou plusieurs fractions de litière souillée.

Pour faciliter la lecture des dessins ci-annexés, la nomenclature des éléments essentiels du dispositif selon l'invention est reprise ci-après:
(1) tamis à mailles calibrées, en forme de bande sans fin;
(2) fond bombé pouvant recevoir l'animal;
(3) rouleau moteur entraînant le tamis;
(4) zone de triage, à l'extrémité du fond bombé:
(5) gouttière de récupération de la litière propre;
(6) sac poubelle;
(7) canal de remontée de la litière propre;
(8) chaîne de transport à anneaux;
(9) interruption du canal anti-engorgement dans la réserve;
(10) réserve de litière propre alimentant le tamis;
(11) canal de retour de chaîne;
(12) roue dentée d'entraînement de la chaîne;
(13) clapet anti-odeurs;
(14) rebords anti-projections;
(15) poussoir pour le remplissage à l'horizontale du sac poubelle;
(16) axe de rotation du poussoir;
(17) arceau de maintien du sac poubelle;
(18) fond amovible protégeant le sac poubelle;
(19) règle de répartition;
(20) double paroi de la réserve;
(21) réceptacle formant tiroir coulissant.

## Revendications

1. Dispositif formant bac à litière pour animaux et comprenant une réserve (10) de litière propre et/ou recyclée, un fond fixe (2) qui constitue le fond du réceptacle pour l'animal et un réceptacle (21) pour déjections et matières souillées, caractérisé en ce qu'il comprend une combinaison des éléments suivants, en relation fonctionnelle entre eux:
- un tamis flexible (1), équipé pour pouvoir se déplacer comme un tapis transporteur sur un fond fixe; sur lequel circule le tamis flexible (1)
- le réceptacle (21) pour déjections et matières souillées assurant de préférence le maintien d'un sac poubelle (6) et la répartition des déchets dans celui-ci à l'aide d'un poussoir (15);
- un organe de transport continu (8), tel qu'une chaîne ou une courroie, mine par exemple par un pignon entraîneur (12), circulant dans une enceinte (5,7,9,11) comprenant successivement:
• une zone de triage et de récupération de la litière propre triée, avantageusement en forme de gouttière (5),
• une zone de remontée de la litière (7),
• une zone de distribution (9) de la litière dans la réserve (10),
• une zone (11) de retour de la chaîne ou de la courroie vers la zone de triage.

2. Dispositif selon la revendication 1, caractérisé en ce que la réserve (10) de litière propre et/ou recyclée comprend:
• une double paroi (20) favorisant l'utilisation prioritaire de la litière triée sur la litière neuve, ainsi que sa répartition sur toute la largeur du bac pour un faible volume mort, et/ou
• un trop-plein évitant un blocage du système de remontée en cas de remplissage excessif de la réserve.

3. Dispositif selon l'une des revendications 1 ou 2, caractérisé en ce qu'il comprend également, en option:
- un fond amovible (18) protégeant le réceptacle pour déjections et matières souillées ou le sac poubelle et faisant réceptacle pour les déchets qui seraient tombés hors du sac poubelle;
- des rebords anti-projections (14) autour de la zone utile pour l'animal;
- un clapet anti-odeurs (13), destiné à éviter la remontée des odeurs éventuelles provenant du dit réceptacle pour déjections et matières souillées;
- un système électrique ou électronique de détection de passage de l'animal et de temporisation;
et/ou
- un système électrique assurant le fonctionnement et/ou l'autonomie du bac en cas de panne de l'alimentation électrique principale.

4. Dispositif selon l'une quelconque des revendications 1 à 3, caractérisé en ce que le tamis flexible à maille calibrée (1) est monté en forme de bande sans fin et constitué en fils ou câbles d'acier inoxydable sertis ou soudés ou en toute matière suffisamment souple et résistante.

5. Dispositif selon l'une quelconque des revendications 1 à 4, caractérisé en ce que l'organe (8) de transport est constitué d'une chaîne ou courroie mécanique accolée à des spires métalliques, de préférence un long ressort métallique introduit dans une chaîne type "Vaucanson".

6. Dispositif selon l'une quelconque des revendications 1 à 5, caractérisé en ce que le réceptacle (21) est apte à recevoir un sac poubelle (6) étalé pratiquement horizontalement dans un volume minimum au-dessous de la surface inférieure de la bande sans fin formant tamis (1), la répartition des déchets recueillis dans le sac poubelle (6) étant alors facilitée par l'adjonction d'un poussoir (15) pivotant autour d'un axe (16), agencé pour être animé d'un mouvement pendulaire.

7. Dispositif selon l'une quelconque des revendications 1 à 6, caractérisé en ce qu'un arceau (17) maintient la gueule du sac poubelle (6) ouverte dans une position appropriée.

8. Dispositif selon l'une des revendications 6 ou 7, caractérisé en ce que le sac poubelle (6) est maintenu en position par un arceau (17) et reçoit l'impulsion d'un poussoir (15) pivotant autour d'un axe (16), fixé en des positions appropriées sur un plateau coulissant formant tiroir (21), en vue de faciliter sa mise en place et son retrait.

9. Dispositif selon l'une quelconque des revendications 1 à 8, caractérisé en ce qu'il est piloté par un système de détection de passage d'animal et de temporisation.

10. Procédé pour le nettoyage et le réapprovisionnement automatiques ou semi-automatiques des litières pour animaux utilisant l'appareil selon l'une quelconque des revendications 1 à 9, comprenant l'approvisionnement en litière propre fraîche ou recyclée d'un réceptacle formant bac adapté à l'animal, la mise en mouvement de translation de la charge de litière après dépôt des déjections et/ou de l'urine sur celle-ci, le triage des parties de litière souillées, le recueil sélectif dans un réceptacle de la fraction de la litière souillée à évacuer, la récupération et l'acheminement dans la réserve d'approvisionnement de la fraction de litière propre récupérée, issue du triage, et le recueil et le stockage en vue de leur évacuation subséquente ou ultérieure comme déchet d'une ou plusieurs fractions de litière souillée.

## Claims

1. A device constituting a litter box for animals, and comprising a reserve (10) of clean and/or recycled litter, a fixed bottom (2), which constitutes the bottom of the receptacle for animals and a receptacle (21) for excrement and soiled matter, characterized in that it comprises a combination of the functionally interconnected following elements:
- a flexible screen (1), arranged to be capable of traveling like a conveyor screen on a fixed bottom, on which the flexible screen (1) travels;
- the receptacle (21) for excrement and soiled matter, preferably equipped to hold a trash bag (6) and providing for the discharge of waste into the latter with the aid of a pusher (15);
- a continuous conveying member (8) such as a chain or belt, moved by, for example, a driving pinion (12), traveling in an enclosure (5,7,9,11) comprising successively:
• a zone for sorting and recovery of clean sorted litter, advantageously in gutter (5) form,
• a zone for return of litter (7),
• a zone for distribution of litter into the reserve (9),
• a zone (11) for return of the chain or belt to the sorting zone.

2. The device according to claim 1, characterized in that the reserve (10) of clean and/or recycled litter comprises:
• a double wall (20) promoting priority use of sorted litter over new litter, as well as its distribution over the entire width of the box for a low dead volume, and/or
• an overflow avoiding blockage of the return system in case of excessive filling of the reserve.

3. The device according to either one of claims 1 or 2, characterized in that it alternatively comprises, as an option:
- a removable bottom (18) protecting the receptacle for excrement and soiled matter or the trash bag and forming a receptacle for waste which may have fallen outside the trash bag;
- anti-scatter edges (13) around the zone useful for the animal;
- an anti-odor trap (13), designed to prevent the discharge of any possible odors emanating from the said receptacle for excrement and soiled matter;
- an electrical or electronic system for detecting entry of the animal and duration of the stay;
and/or
- an electrical system providing for operation and/or autonomy of the box in case of failure of the main power supply.

4. The device according to any one of claims 1 to 3, characterized in that the flexible sized-mesh screen (1) is mounted in the form of an endless belt and is composed of crimped or welded wires or cables of stainless steel, or any other sufficiently flexible and strong material.

5. The device according to any one of claims 1 to 4, characterized in that the conveying member (8) is composed of a mechanical chain or belt having metal coils, preferably a long metal spring introduced into a "Vaucanson" type chain.

6. The device according to any one of claims 1 to 5, characterized in that the receptacle (21) is suitable for receiving a trash bag (6) arranged practically horizontally in a minimum volume below the lower surface of the endless belt forming the screen (1), distribution of the waste collected into the trash bag (6) then being facilitated by the addition of a pusher (15) pivoting about an axis (16), arranged to be driven by an oscillating motion.

7. The device according to any one of claims 1 to 6, characterized in that a hoop (17) holds the throat of the trash bag (6) open in suitable position.

8. The device according to either one of claims 6 or 7, characterized in that the trash bag (6) is held in position by a hoop (17) and receives the pulse of a pusher (15) pivoting about an axis (16), fixed in suitable positions on a sliding plate forming a drawer (21), with a view to facilitating its placement and withdrawal.

9. The device according to any one of claims 1 to 8, characterized in that it is controlled by a system for detecting entry of the animal and duration of stay.

10. A process for automatic or semi-automatic cleaning and resupply of litter for animals, comprising supply of fresh clean or recycled litter from a receptacle forming a box adapted to the animal, translation of the load of litter after deposit of excrement and/or of urine on the latter, sorting of the soiled portions of litter, selective collection in a receptacle of the fraction of soiled litter to be removed, recovery of the fraction of clean litter resulting from such sorting, conveyance to the supply reserve of this fraction of recovered clean litter, and collection and storage with a view to subsequent or later removal as waste of one or more fractions of soiled litter.

## Patentansprüche

1. Eine einen Streubehälter für Tiere bildende Vorrichtung, umfassend einen Vorratsraum (10) für saubere und/oder wiederaufbereitete Streu, einen festen Boden (2), welcher den Boden für den Auffangbehälter für das Tier und einen Auffangbehälter für Exkremente und verschmutztes Material bildet, dadurch gekennzeichnet, daß diese Vorrichtung eine Kombination der folgenden Elemente in untereinander funktioneller Wechselwirkung umfaßt:
- ein flexibles Sieb (1), so ausgestattet, daß es sich wie ein Transportband über einem festen Boden bewegen kann, über welchem das flexible Sieb (1) zirkuliert,
- den Auffangbehälter (21) für Exkremente und verschmutztes Material, der vorzugsweise den Halt eines Müllsackes und die Verteilung von Exkrementen darin mit Hilfe einer Druckvorrichtung (15) sicherstellt,
- ein kontinuierliches Transportmittel (8), wie eine Kette oder ein Riemen, das beispielsweise durch ein Antriebsritzel (12) angetrieben wird und in einer Ausnehmung (5, 7, 9, 11) umläuft, welche aufeinanderfolgend umfaßt:
- eine Sichtungs- und Wiedergewinnungszone der in geeigneter Weise gesichteten Streu, vorzugsweise in Form einer Rinne (5),
- eine Zone zum Anheben (7) der Streu,
- eine Zone zum Verteilen (9) der Streu im Vorratsraum (10),
- eine Zone (11) der Umkehr der Kette oder des Riemens zur Sichtungszone hin.

2. Vorrichtung nach Anspruch 1, dadurch gekennzeichnet, daß der Vorratsraum (10) für saubere und/oder wiederaufbereitete Streu umfaßt:
- eine Doppelwandung (20), welche die Verwendung von hauptsächlich gesichteter Streu bezüglich neuer Streu sowie ihre Verteilung über den gesamten Behälter für ein geeignetes Totvolumen begünstigt und/oder
- ein Überlaufrohr, das ein Verstopfen des Aufstiegssystems im Falle einer übermäßigen Auffüllung des Vorratsbehälters verhindert.

3. Vorrichtung nach Anspruch 1 oder 2, dadurch gekennzeichnet, daß sie des weiteren wahlweise umfaßt:
- einen lösbaren Boden (18), der den Auffangbehälter für Exkremente und verschmutztes Material oder den Müllsack schützt und einen Auffangbehälter für die Abfälle bildet, welche aus dem Müllsack herausfallen;
- gegenprojezierende Ränder (14) um die Benutzungszone für das Tier;
- eine geruchsbindende Klappe (13), welche dazu bestimmt ist, das Aufsteigen von Gerüchen zu verhindern, welche möglicherweise aus dem genannten Behälter für Exkremente und verschmutzte Materialien aufsteigen;
- ein elektrisches oder elektronisches System zur Feststellung des Überschreitens oder Verweilens des Tieres und/oder
- ein elektrisches System, welches das Funktionieren und/oder die Autonomie des Behälters im Falle einer wesentlichen elektrischen Versorgungspanne sicherstellt.

4. Vorrichtung nach einem der vorhergehenden Ansprüche 1 bis 3, dadurch gekennzeichnet, daß das flexible, maschenmäßig kalibrierte Sieb (1) in Form eines Endlosbandes angebracht ist und aus Drähten oder Kabeln aus rostfreiem Stahl, gepreßt oder geschweißt, oder aus jeglichem Material, das ausreichend elastisch und widerstandsfähig ist, gebildet ist.

5. Vorrichtung nach einem der Ansprüche 1 bis 4, dadurch gekennzeichnet, daß das Transportmittel (8) aus einer Kette oder einem Band gebildet ist, welche bzw. welches mechanisch an Metallschraubengänge, vorzugsweise eine in eine Kette vom Typ "Vaucanson" eingeführte lange Metallfeder angebunden ist.

6. Vorrichtung nach einem der Ansprüche 1 bis 5, dadurch gekennzeichnet, daß der Auffangbehälter (21) geeignet ist, einen Müllsack (6) aufzunehmen, welcher praktisch horizontal im Minimalvolumen unter der Fläche, unter welcher das siebbildende Endlosband (1) angeordnet ist, ausgebreitet ist, wobei die Verteilung der wiedergewonnenen Abfälle im Müllsack (6) des weiteren durch das Einbringen einer sich um eine Achse (16) drehenden Druckvorrichtung (15) erleichtert wird, welche zum Ausführen einer Pendelbewegung eingerichtet ist.

7. Vorrichtung nach einem der Ansprüche 1 bis 6, dadurch gekennzeichnet, daß ein Bügel (17) die Öffnung des Müllsackes (6) in einer geeigneten Position offen hält.

8. Vorrichtung nach einem der Ansprüche 6 oder 7, dadurch gekennzeichnet, daß der Müllsack (6) durch einen Bügel (17) in Stellung gehalten wird und den Impuls einer sich um eine Achse (16) drehenden Druckvorrichtung (15) empfängt, welche in geeigneten Positionen über einer ineinander verschiebbaren Ebene, die einen Schuber (21) bildet, befestigt ist, um das in Position bringen und das Herausziehen zu erleichtern.

9. Vorrichtung nach einem der Ansprüche 1 bis 8, dadurch gekennzeichnet, daß sie durch ein System zum Nachweis des Durchganges oder des Verweilens des Tieres gesteuert ist.

10. Verfahren zur Reinigung und zur automatischen oder halb-automatischen Rückgewinnung von Streu für Tiere unter Verwendung der Vorrichtung nach einem der Ansprüche 1 bis 9, umfassend das Bereitstellen sauberer frischer oder wiederaufbereiteter Streu in einem Auffangbehälter, der einen an das Tier angepaßten Behälter bildet, das in Bewegung bringen der Einstreu nach dem Abscheiden von Exkrementen und/oder Urin darauf, das Sichten der verschmutzten Streupartien, die selektive Rückgewinnung der verschmutzten Streufraktion, welche zu entsorgen ist, in einem Auffangbehälter, das Zurückgewinnen und Sammeln der sauberen zurückgewonnen Streufraktion im Vorratsbehälter, welche aus der Sichtung hervorgeht und das Gewinnen und Lagern im Hinblick auf ihr nachfolgendes oder letztendliches Entfernen als Abfall einer oder mehrerer Fraktionen verschmutzter Streu.
